(19) Europäisches Patentamt / European Patent Office / Office européen des brevets

(11) **EP 3 489 932 A1**

(12) **EUROPEAN PATENT APPLICATION**

(43) Date of publication:
**29.05.2019 Bulletin 2019/22**

(51) Int Cl.:
***G09B 9/12*** *(2006.01)*

(21) Application number: **17203311.0**

(22) Date of filing: **23.11.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **E2M Technologies B.V.**
**1086 XP  Amsterdam (NL)**

(72) Inventor: **VELTENA, Marinus Cornelis Christaan**
**1086 XP Amsterdam (NL)**

(74) Representative: **Cramwinckel, Michiel**
**Cramwinckel Consultancy**
**Kallenkoterallee 82 A**
**8331 AJ Steenwijk (NL)**

(54) **A MOVEMENT PLATFORM SYSTEM**

(57)    The invention is directed to a motion platform system suited for generating a combination of large excursions, large accelerations and high frequency responses for all degrees of freedom of the motion platform system. The motion platform system comprises a movement platform connected to a base by more than one actuators. The movement platform is movable along 6 degrees of freedom relative to the base. The number of actuators connecting the movement platform with the base is at least eight resulting in that the movement simulator system is an overdetermined system.

Fig. 1

**Description**

The invention is directed to a motion platform system suited for generating a combination of large excursions, large velocities and high frequency responses for all degrees of freedom (DOF) of the motion platform system. The motion platform system comprises a movement platform connected to a base by more than one actuators and the movement platform is movable along 6 degrees of freedom relative to the base.

Such systems are known from US2005042578. This publication describes a driving simulator or also referred to as a vehicle motion simulator. A hexapod movement platform with six actuators and six degrees of freedom is provided with a seat for an operator and provided with operator controller elements. A problem with the hexapod as disclosed in this publication is that a combination of large excursions, large accelerations and high frequency response is very hard to achieve.

US2011/0308296 describes a shaker suited to test a gyroscope before it is used in space. The test device includes a movement platform connected to a base by means of six actuators such that the movement platform can move in 6 degrees of freedom. The platform is suited to mount the test object. Such shakers are very suited to test at high frequencies but cannot be used for large excursions because the electromechanical actuators used are short stroke. Furthermore it is very hard to control the cross-couplings between the DOF's because of the low stiffness character of the actuator.

The aim of the present invention is to provide a motion platform system suited for generating a combination of large excursions, large accelerations and high frequency responses for all degrees of freedom of the motion platform system.

This aim is achieved with the following system. A motion platform system suited for generating a combination of large excursions, large velocities and high frequency responses for all degrees of freedom of the motion platform system,

wherein the motion platform system comprises a movement platform connected to a base by more than one actuators,
wherein the movement platform is movable along 6 degrees of freedom relative to the base,
wherein the number of actuators connecting the movement platform with the base is at least eight resulting in that the movement simulator system is an overdetermined system.

Applicants found that the overdetermined system where the forces are divided over more actuators realizes an inherently higher mechanical stiffness making the combination of large excursions, large accelerations and high frequency responses for all degrees of freedom possible. This mechanically stiff structure is suitably used in combination with an advanced motion controller which uses a dynamic mass model of the moved object to predict the necessary drive currents of the electric actuators. This information is used to control the overdetermined motion system and the inherent force fight between the actuators as well as for optimized dynamic control of the system in general. This combination of properties and control technique result in the desired combination of large excursions, large accelerations and high frequency response for all degrees of freedom.

Excursion of the motion platform system is defined as the displacement in 6 degrees of freedom of the platform.

Velocity of the motion platform system is defined as velocity of the platform in all 6 degrees of freedom.

Acceleration of the motion platform system is defined as acceleration of the platform in all 6 degrees of freedom expressed in $m/s^2$.

High frequency response in all degrees of freedom of the motion platform system is defined as the capability of the motion system to provide controllability in each degree of freedom, in other words to have the platform perform the desired motion up to upper frequency band of the bandwidth.

The high excursions are preferably above 0.5 m the high accelerations are preferably above 40 $m/s^2$, the high frequencies are preferably above 15 Hz and more preferably above 25 and even more preferably between 25 and 35 Hz. It is found that the velocity can also be high using the overdetermined system, suitably higher than 1 m/s.

The motion platform system is suitably to be used as a driving simulator or drive-flight simulator wherein the combination of large excursions, large accelerations and high frequency responses for all degrees of freedom generate motion sensations on an operator, wherein the movement platform comprises a cabin which houses a seat for the operator and operator controller elements.

The base of the motion platform system of such a driving simulator or drive-flight simulator may de directly or indirectly fixed to the earth or be part of a horizontal displacement system for controlled displacement and acceleration of the movement platform system along the two horizontal axes as for example described in the aforementioned US2005042578. Such a horizontal displacement system provides the lower frequency handling required to also simulate for example steering of the vehicle. Applicants found that the motion platform system according to the present invention also provides such low frequency movements and for some applications such a horizontal displacement system may even be omitted.

The motion platform system may also be suited to be used as a shaker for testing a test object, wherein the combination of large excursions, large accelerations and high frequency responses for all degrees of freedom generate motion sensations on the test object and wherein the movement platform comprises means to connect the test object to the movement platform.

By providing at least eight actuators a redundant system is obtained, even having a one fold redundancy and in some situations an even two-fold redundancy. This because if an actuator would fail the remaining seven or respective six actuators would still be able to fully control the platform and optionally bring the platform to a safe position. If two actuators fail the redundancy will depend on how they are configured relative to each other. A consequence of the overdetermined system is that, depending on the orientation of the actuators with respect to the payload, two specific patterns of relative actuator force exist which merely deforms the platform. This is commonly referred to as actuator force-fight. The controller of the platform system according to the invention suitably enables one to dynamically re-distribute forces between actuators by actively controlling these force-fights. More preferably the controller is configured (a) to adapt a demanded platform movement set-point to a commanded platform movement set-point, (b) is configured to move the eight long-stroke actuators such that the commanded platform movement set-point is achieved and (c) is configured to dynamically redistribute the forces as exercised by the actuators on the platform between the actuators.

A further advantage of for example a platform system with eight actuators is that when one single actuator would encounter a so-called single actuator run away the remaining seven actuators would compensate for such a run away and mediate any negative results. Further advantages are that the eight actuators are more vertically positioned as compared to the six-actuator prior art design. This is advantageous because it makes the eight actuators more effective in countering gravity. The higher number of actuators further results in that less powerful actuators can be applied in the simulator according to the invention as compared to the six-actuator prior art design. Furthermore the workspace of the simulator according to the invention has eight constrains instead of six. As a consequence the workspace, i.e. the space in which the simulator can move, is more symmetrical and compact. The workspace of the six-actuator prior art design has a volume of which parts are hardly ever used but are worst case in terms of actuator forces. Such parts of the workspace do not exist for the simulator according to the invention. This means that for example the motor and servo drive power of an electromechanical actuator can be less for the simulator according to the invention. It is evident that the above advantages are also valid or even more valid when more than eight actuators are present. Suitably the number of actuator will not exceed 24 for practical reasons. In the description reference is made to a platform system having eight actuators. The disclosure is also valid for platform systems having more than eight actuators if not expressly excluded.

Suitably all actuators contribute to the movement of multiple degrees of freedom. Such a system is also referred to as a synergistic system. An overdetermined synergistic platform system according to the invention can also be used as a solution to achieve larger angular displacements than are possible with the prior art synergistic determined motion systems. The angular displacements of determined synergistic motion systems are limited by the occurrence of mechanical singularities where the actuator forces required for platform movements and for counteracting gravity become infinite. In a properly designed overdetermined synergistic platform system according to this invention, these mechanical singularities are cancelled by the redundant actuators. However, where a prior art synergistic motion system can have regions in the workspace where mechanical singularities exist, an overdetermined synergistic platform system can have regions in the workspace where the redundancy of the mechanism is locally reduced. These are regions where any group of 6 actuators from the total number of actuators has developed a mechanical singularity. The remaining (redundant) actuators will however cancel the singularity. The cancelled mechanical singularity has thus effectively reduced the redundancy in that region of the workspace. In these regions of cancelled mechanical singularity, a non-zero force-fight may be required to minimize actuator forces.

Hexapod platform systems having high actuator velocities, such as for example 1 m/s or higher, will usually be provided with hydraulic actuators having a relatively elongated brake zone. Such a zone is required in case of a failure of such a single actuator. These brake zones result in that the length of the actuator increases and thus the size of the entire platform. With the platform system according to the invention such elongated brake zones are not required because in case of a failure of one actuator the remaining 7 actuators will ensure that the failed actuator will stay away from its end zone thereby eliminating the need for an elongated brake zone.

By long stroke actuators is here meant any actuator which can extend more than 10% of its length starting from its most compressed position. The starting length is here defined as the distance between the two connecting points as present at each end of the actuator. For the present application the long stroke actuators may suitably extend more than 10 cm. The long stroke actuators may be hydraulic actuators, electromechanical actuators or electromagnetic actuators, preferably electromechanical actuators.

The above advantages are largely due to the fact that the platform system according to the invention is an overdetermined system. The platform system is overdetermined because the number of degrees of freedom of the system, i.e. 6 degrees of freedom, is smaller than the number of actuators. Such overdetermined systems have not before been applied for a movement platform system having at least eight long stroke actuators. Especially not for a system wherein the platform movement is controlled in at least its position domain, let alone in its position, velocity and acceleration domain. Physically this leads to an underdetermined control problem for the actuators because the state of the platform does not fully determine the state of the actuators. Because an induvial platform is rigid, the platform movement state, expressed in position, velocity and acceleration, uniquely determines actuator position, velocity and acceleration of all actuators but not uniquely their force. The solution space contains infinite solutions for actuator force that not only result in the desired platform movement but also attempt to deform the platform. This is the referred to force-fight.

Hexapods having 6-degrees of freedom and six actuators are not overdetermined. This is because the platform can freely move in all its 6-degrees of freedom for all combinations of movement of its six actuators.

The commanded and demanded platform movement set-point may be a platform position set-point. Preferably the commanded and demanded platform movement set-point is a commanded and demanded set-point for platform position, velocity and acceleration.

The demanded platform movement set-point may be the output of a simulation program or host of for example the recreational ride or of a flight simulation program or host. The demanded movement set-point may be directly provided from a simulation program or host or may be the output of a motion cueing filter. Such a motion cueing filter may minimize movements which do not contribute to the desired motion cuing experience.

In the aforementioned applications the demanded set-point is not known upfront. This may result in that the commanded set-point would drive the movement platform system out of its operational and performance limits. Such predetermined operational and performance limits may comprise of platform domain limits, actuator domain limits and motor current domain limits in case the actuator is an electromechanical actuator or an electromagnetic actuator. When hydraulic actuators are used the performance limits would comprise of hydraulic system domain limits. Examples of operational and performance limits when electromechanical actuators are used are provided in the detailed description for formula (1) below. a platform domain limits are excursion limits. Examples of actuator domain limits are the extreme actuator positions, i.e. extracted and compressed positions of an actuator, maximum motor velocity, maximum motor or servo-drive continuous- or peak current, maximum electrical power, maximum motor temperature. Examples of hydraulic actuator domain limits are the continuous- and peak hydraulic flow limit.

The controller and especially part (c) of the controller is based on a local linearization of the movement platform system equations of motion. The stability of this controller may be unfavorable outside the performance limits due to non-linearity of the system outside the performance limits. Furthermore external forces, such as actuator buffer forces, may act on the actuators which are not modelled or timed incorrectly. For these reasons it is preferred to use a controller comprising of a guidance module configured to adapt a demanded platform movement set-point to a commanded platform movement set-point by a counter movement and configured to calculate a force-fight set-point wherein the counter movement and force-fight set-point are derived from a model predictive control algorithm which uses a cost-minimizing control strategy. Preferably the long stroke actuators are electromechanical actuators provided with a motor configured to receive a motor current from a servo drive and wherein the platform system has predetermined performance limits comprising of platform domain limits, actuator domain limits and motor current limits and wherein the model predictive control algorithm uses a cost-minimizing control strategy which is configured to let the platform stay within its performance limits.

The counter movement of the platform aims to let the platform stay within its performance limits. The generation of a force-fight set-point results in that a better balance between the actuators such that motor current constraints per actuator are not exceeded, or such that motor currents are optimized. The force-fight set-point may in most situations be zero. The force fights set-point may deviate from zero when for example an individual actuator exceeds a predetermined force and/or when an individual actuator would have a predetermined and defined near zero velocity and force set-point. It has been found when an individual actuator has a near zero velocity and force set-point an instable system may be obtained which could result in undesirable vibrations. By allowing a small force fight, such undesirable vibrations may be avoided.

The guidance module is suitably configured to adapt the demanded set-point to a commanded set-point by a counter movement for the platform and by a force-fight set-point. The counter movement and force-fight set-point are derived from a model predictive control (MPC) algorithm, which calculates a predicted workspace of the platform. The model predictive control algorithm may be an unconstrained or constrained model predictive control algorithm. The model predictive control algorithm uses a cost- minimizing control strategy. Suitably the predicted workspace is calculated by performing a single DOF excursion analysis for the predicted platform state as for example described in more detail in applicants US8996179(B2).

The guidance module makes use of a kinematic model of the movement platform system, and of the inverse equations of motion of the movement platform system which is a model that is derived from the kinematic-, mass- and performance model of the movement platform, actuators and motors. The cost function will allocate costs to a constrained property associated with the above referred to performance limits. In addition, there is a cost associated by not following the demanded platform movement. The counter movement, also referred to as a washout acceleration, and force-fight set-point are computed using an optimal controller that minimizes this cost function. The guidance module is configured to be executed at each computational cycle of the controller.

The guidance module may be configured in different manners. It is assumed that, for example the host drive-file, is properly designed to optimize motion cues as communicated as the demanded platform movement set-point. The guidance module should interfere as little as possible in order to avoid the user experiencing a different motion cue from the demanded motion cue. The guidance module is therefore suitably designed to track the demanded set-point as closely as possible. Preferably the cost-minimizing control strategy (i) minimizes platform tracking errors in position, velocity and acceleration, (ii) stays within the position and velocity limits of the actuator, (iii) minimizes motor currents and/or minimize force-fight and (iv) protects against over-current. Alternatively the cost-minimizing control strategy (v) minimizes specific force errors, (vi) stays within the position and velocity limits of the actuator, (vii) minimizes motor currents at the expense of a non zero force-fight, for example in the regions of cancelled mechanical singularities, and/or (viii) minimize force-fight and (ix) protects against over-current.

Suitably the cost function for the guidance module for an unconstrained model predictive control algorithm may be as below:

$$J = J_{Pt} + J_{Vt} + J_{At} + J_{Ve} + J_{Ae} + J_{pe} + J_{ve} + J_{Ie} + J_{FF}$$

$$(1)$$

wherein:

$J_{Pt}$ is the cost function for the platform position tracking error. This cost function assigns a cost to the difference between the demanded set-point for platform position and the commanded set-point for platform position.

$J_{Vt}$ is the cost function for the platform velocity tracking error. This cost function assigns a cost to the difference between the demanded set-point for platform velocity and the commanded set-point for platform velocity.

$J_{At}$ is the cost function for the platform acceleration tracking error. This cost function assigns a cost to the difference between the demanded set-point for platform acceleration and the commanded set-point for platform acceleration.

$J_{Ve}$ is the cost function for platform excess of velocity in all 6 degrees of freedom. The platform excess velocity cost function assigns a cost to an excess of platform velocity. It can be used to define the operational velocity limits at platform level. As there are no cross-couplings, it is defined for each degree of freedom individually as a scalar function.

$J_{ae}$ is the cost function for platform excess of acceleration in all 6 degrees of freedom. The platform excess of acceleration cost function assigns a cost to a platform acceleration that exceeds a predetermined limit value. It can be used to reduce the operational platform acceleration limits. As there are no cross-couplings, it is defined for each degree of freedom individually as a scalar function.

$J_{pe}$ is the cost function for the position of the eight actuators excess. The objective of the actuator excess of position cost function is to avoid that actuators exceed their position travel. In order to enable the actuators to smoothly brake at their end stops, the position cost function is suitably a function of the actuator speed.

$J_{ve}$ is the cost function for the excess of velocity of the eight actuators. Note that the actuator velocity is constrained by a maximum value and a braking profile near the end-stops.

$J_{Ie}$ is the cost function for excess of motor current of the eight actuators. This cost function may be configured to achieve a Least Squares current for all motors combined or to limit the maximum motor current allowed. The motor current may be expressed as a function of platform acceleration, the force-fight value and the static weight of the platform.

$J_{FF}$ is a cost function which assigns a cost to the presence of a force-fight between the actuators.

Weight factors for the above individual cost functions are set when tuning the controller.

For a given demanded set-point for platform position, velocity and acceleration the total cost J can be minimized by construction of a washout acceleration:

$$\vec{a}_{wo} = \begin{pmatrix} a_x & a_y & \dots & a_\psi \end{pmatrix}^T$$

$$(2)$$

wherein wo refers to the platform, x,y, ....$\Psi$ in the vector refers to the six degrees of freedom, and a force-fight set-point:

$$\vec{f} = \begin{pmatrix} f_{ip} & f_{op} \end{pmatrix}^T$$

(3)

wherein $f_{ip}$ refers to the in-plane force fight and $f_{op}$ refers to the out-of-plane force fight. The in-plane force fight is the situation wherein both diagonals of the platform are squeezed together by in-plane forces. The out-of-plane force fight is the situation that one diagonal of the platform is pushed up and one diagonal of the platform is pushed down by forces perpendicular to the plane of the rectangular platform.

For a time instant $\Delta t$ into the future a 2nd order Taylor approximation of the cost function (1).

$$J(\Delta t) = J(0) + \frac{\partial J}{\partial \bar{x}} \Delta \bar{x} + \frac{1}{2} \frac{\partial^2 J}{\partial \bar{x}^2} \Delta \bar{x}^2$$

(4)

In which:

$$\bar{x} = \begin{pmatrix} \vec{a}_{wo} & \vec{f} \end{pmatrix}$$

(5)

At a time $\Delta t$ the cost is minimized for:

$$\Delta \bar{x} = J(\Delta t) = \left( \frac{\partial^2 J}{\partial \bar{x}^2} \right)^{-1} \frac{\partial J}{\partial \bar{x}}$$

(6)

Which means that the optimal rate of change for $\vec{x}$ is given by:

$$\dot{\bar{x}} = \frac{1}{\Delta T} \left( \frac{\partial^2 J}{\partial \bar{x}^2} \right)^{-1} \frac{\partial J}{\partial \bar{x}}$$

(7).

To avoid semi-static offsets and drifts a tracking loop is suitably part of the controller. The tracking loop is configured to adjust the commanded platform movement set-point such that the steady-state error between the commanded platform movement set-point and a measured platform movement is decreased towards zero.

Suitably the actuators are electromechanical actuators provided with a motor configured to receive a motor current from a servo drive. For such a platform system the controller is comprised of a control law module which is configured to (b) move the eight long-stroke actuators such that the commanded platform movement set-point is achieved and (c) is configured to dynamically redistribute the forces as exercised by the actuators on the platform between the actuators by providing a velocity and motor current set-point for each individual servo drive using the platform movement set-point and wherein the motor current set-point is compensated for the difference of the actual force fight signal and the force fight set-point as obtained in the guidance module.

The controller of a platform system provided with electromechanical actuators provided with a motor configured to receive a motor current from a servo drive is suitably comprised of the following control law module. Control law module which is configured as a Multiple Input Multiple Output controller to (b) move the at least eight long-stroke actuators such that the commanded platform movement set-point is achieved and (c) is configured to dynamically redistribute the forces as exercised by the actuators on the platform between the actuators by two feed forward paths (x) and two feedback paths (y). In the two feed forward paths (x) the velocity set-point for each individual servo drive is determined using the commanded platform movement set-point as input and the motor current set-point is determined using the commanded platform movement set-point and the force fight set-point as input. In the two feedback paths (y) the error between actual platform movement and the commanded platform movement set-point is reduced and wherein the motor current set-point is adapted such that the difference between actual force-fight and the force-fight set-point is counter acted. The control law module will make use of a kinematics model of the movement platform and its inverted equations of motion.

In the above movement platform system each electromechanical actuator is suitably provided with sensors configured to obtain measured actuator position and velocity sensor data. The actual platform movement in path (y), preferably in position and more preferably in position, velocity and acceleration, is reconstructed using a backwards kinematics model of the motion platform system wherein the measured actuator position and velocity sensor data is used as input. This tracking loop as part of (y) is configured to adjust the commanded set-point for platform position such that the steady-state error between the commanded set-point for platform movement and the measured platform movement is decreased towards zero.

The actual force-fight signal in (y) between the eight actuators for electromechanical actuators is determined using the actual motor currents of the servo drives, the acceleration of the actuators and the platform position as input. The actual force fight of a platform with eight actuators and a platform having four corners and two diagonals is (i) the force-fight of the eight actuators in the plane of the platform which force-fight causes in-plane deformation where both diagonals of the platform are squeezed together and (ii) the force-fight of the eight actuators perpendicular to the plane of the platform which force-fight causes out-of-plane deformations where one diagonal of the platform is pushed up and one diagonal of the platform is pushed down.

The platform and the base of the platform system may have any shape which is suited to connect the base via the at least eight actuators to the platform. In case of eight actuators the base and platform may be rectangular, suitably square. Other planes having four corners, such as a trapezium is also conceivable.

The long stroke actuator is suitably an electromechanical actuator of the in-line direct drive actuator type comprising a motor directly mounted on the ball screw shaft of the electromechanical actuator. This type is preferred over a folded actuator using belts or chains because it results in a platform system having in use less acceleration noise and audible noise. The motor is suitably a torque motor. The actuator may be provided with an elastomer buffer to absorb a failure when the actuator is in full compression. The actuator may be provided with a crush tube to absorb a failure when the actuator is in full extension. Suitably each actuator is provided with a sensor for measurement of motor position and velocity having output means connected to the controller via the servo drive. The position and velocity sensor signals are used for reconstruction of the actuator and platform position and preferably position, velocity and acceleration.

Suitably the motor phases of the torque motor are connected to a short coil brake resistor. Such a short coil brake resistor is advantageous in case of a power or other failure. In such a situation the actuators will have compressive actuator forces for any static position within the workspace resulting in that the platform system will return to a predetermined safe position passively on the short coil brakes under gravity. There is no need for an active return to home system as for example described in US5931739. The motor phases will be connected to the short coil brake resistors by a short coil brake circuit. In case of failure the electromechanical actuator acts as a damper wherein the kinetic and potential energy is dissipated in the resistors causing the actuator to decelerate and move down to settled position with limited speed.

Each long stroke actuator is suitably connected to the platform and to the base by means of a universal joint having two rotational degrees of freedom. Each joint may comprise of a machined steel housing and a shaft that runs in two tapered roller bearings or a needle bearing as part of the platform or base. Preferably the platform and base is provided with needle bearing because this enables the largest possible shaft diameter, where the bending moment has its maximum value, while still maintaining limited outside dimensions of the platform system. The lower bearing units as part of the base may be "siamized" (combined) in order to reduce the spacing between two joints. Such a siamized structure is allowed because failure of such a lower bearing is not critical due to the fact that the platform system itself has a two-fold redundancy.

The invention is also directed to a method for producing motion sensations in a combination of large excursions, large accelerations and high frequency response for all degrees of freedom using a motion platform system comprising a base; a platform movable along 6 degrees of freedom relative to said base and long-stroke actuators coupling the base with the platform, wherein at least eight long-stroke actuators couple the base with the platform resulting in that the platform system is an overdetermined movement platform system.

The low and high frequencies may be as discussed above for the platform itself.

The method preferably further comprises a control of the overdetermined movement platform system by performing a guidance step (a) and a control law step (b), wherein

in guidance step (a) a demanded platform movement set-point is adapted to a commanded platform movement set-point by calculating a counter movement for the platform and by calculating a force-fight set-point, wherein the counter movement and force fight set-points are derived using a model predictive control algorithm which uses a cost-minimizing control strategy, and

in control law step (b) the long-stroke actuators are moved such that the commanded platform movement set-point of (a) is achieved while dynamically redistributing the forces as exercised by the actuators on the platform between the actuators according to the force-fight set-point obtained in (a).

The number of actuators may be as described for the platform. The preferred embodiments and explanations mentioned for the platform are also valid for this method. Some preferred embodiments are described below.

Suitably the commanded and demanded platform movement set-point is a commanded and demanded set-point for platform position, velocity and acceleration.

The control law step (b) is suitably comprised of a feed forward path (x) and a feedback path (y). Feed forward path (x) comprises of two feed forward paths wherein the velocity set-point for each individual servo drive is determined using the commanded or adjusted commanded platform movement set-point as input and the motor current set-point is determined using the commanded or adjusted commanded platform movement set-point and the force fight set-point as input. Feedback path (y) comprises of two feedback paths wherein the error between actual platform position, velocity and acceleration and the commanded or adjusted commanded platform movement set-point is reduced, wherein measured actuator position and velocity sensor data is used to reconstruct the actual platform position, velocity and acceleration using a backwards kinematics model of the motion platform system, and wherein the motor current set-point is adapted such that the difference between actual force-fight and the force-fight set-point is counter acted.

Suitably the commanded and demanded platform movement set-point is a commanded and demanded set-point for platform position and wherein the position of each actuator is measured, a measured platform position is calculated using the measured actuator positions as input in (y) in a backward kinematics model and wherein the commanded set-point for position is adjusted to obtain an adjusted platform movement set-point by decreasing the steady state error towards zero between the commanded set-point for platform position and the measured platform position. Preferably the commanded and demanded platform movement set-point is a commanded and demanded set-point for platform position, velocity and acceleration and wherein the position, velocity and acceleration of each actuator is measured, a measured platform position is calculated in (y) using the measured actuator position, velocity and acceleration as input in a backward kinematics model and wherein the commanded set-point for position is adjusted to obtain an adjusted platform movement set-point by decreasing the steady state error towards zero between the commanded set-point for platform position and the measured platform position.

Suitably the long stroke actuators are electromechanical actuators provided with a motor which receive a motor current from a servo drive. The platform system has predetermined operational and performance limits comprising of platform domain limits and actuator domain limits, including motor and servo-drive limits. The model predictive control algorithm may then suitably use a cost-minimizing control strategy which is configured to let the platform stay within its performance limits.

Suitably in the control law step (b) the forces as exercised by the actuators on the platform are dynamically redistributed between the actuators by providing a velocity and motor current set-point for each individual servo drive using the adjusted platform movement set-point. The motor current set-point is compensated for the difference of an actual force fight signal and the force fight set-point as obtained in the guidance module.

Suitably control law step (b) is comprised of a feed forward path (x) and a feedback path (y) according to

(x) two feed forward paths wherein the velocity set-point for each individual servo drive is determined using the commanded as input and the motor current set-point is determined using the commanded or adjusted commanded platform movement set-point and the force fight set-point as input and

(y) two feedback paths wherein the error between actual platform position, velocity and acceleration and the commanded or adjusted commanded platform movement set-point is reduced and wherein the motor current set-point is adapted such that the difference between actual force-fight and the force-fight set-point is counter acted.

The actual platform position, velocity and acceleration may be reconstructed using a backwards kinematics model of the motion platform system and measured actuator position and velocity sensor data as input. The actual force-fight between the actuators may be determined using the actual motor currents of the eight servo drives, the actual acceleration of the eight actuators and the platform position as input. For a platform having eight actuators and a platform having four corners and two diagonals the force fight is defined as (i) the force-fight of the eight actuators in the plane of the platform which force-fight causes in-plane deformation where both diagonals of the platform are squeezed together and (ii) as the force-fight of the eight actuators perpendicular to the plane of the platform which force-fight causes out-of-plane deformations where one diagonal of the platform is pushed up and one diagonal of the platform is pushed down.

The invention shall be illustrated by the following non-limiting figures.

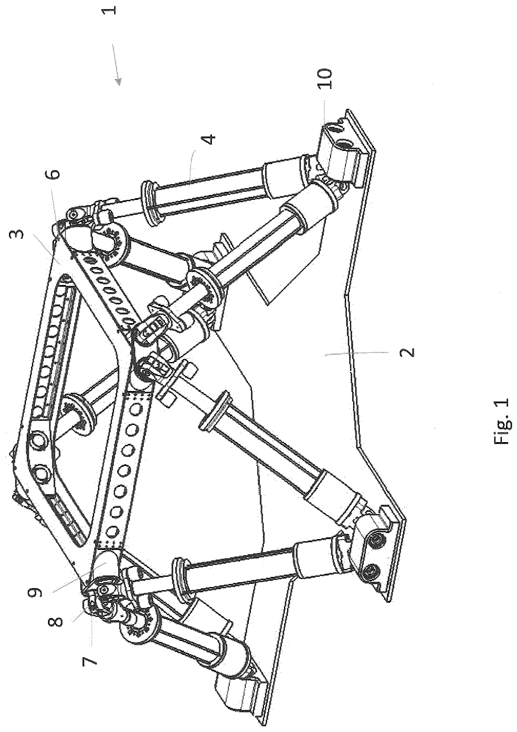

Figure 1 shows a movement platform system (1), comprising a rectangular base (2); a rectangular platform (3) movable along 6 degrees of freedom relative to said base (2), eight long-stroke actuators (4). The eight actuators (4) directly couple the base (2) with the platform (3). The base has four corners (5), wherein at each corner the lower ends of two actuators (4) are pair wise connected to said base (4). The platform has four corners (6), wherein at each corner the upper ends of two actuators (4) are pair wise connected to the platform (3). The actuators (4) are connected to said base (4) and platform (3) via a universal joint (7) having two rotational degrees of freedom. The universal joint (7) has a machined steel housing (8) linked at one end to the end of the actuator and at its other end rotatable connected to a needle bearing (9). The needle bearings (9) located at the same elevation as the corners (6) of the platform at either side of corner (6) and pointing away from said platform (3). By connecting the needle bearings directly at the same elevation of the corner (6) of the platform in the same plane as the platform (3) a platform system (1) is obtained having a low centre of gravity. A low centre of gravity will reduce the forces exercised on the platform system, lower the power consumption and enables one to make use of less powerful actuators. In addition the eye point of the user as positioned, in use, on top of the platform, e.g. in a cabin or the like, will be lowered relative to the so-called motion platform centroid (MPC). This will result in an improved motion cuing, i.e. less parasitic acceleration, because the vertical distance between the MPC and the user eye point is reduced. The MPC is the geometrical centre of the octagon formed by the 8 joint centres. Finally because the height of the entire platform system and possible cabin or other structure placed on top of the platform system can be lowered it is possible to place the platform system in a building with a lower ceiling.

The needle bearings (9) of a pair of universal joints (7) at the corners (5) of the base (2) are siamized or combined in one housing (10) such that the distance between said needle bearings is minimized.

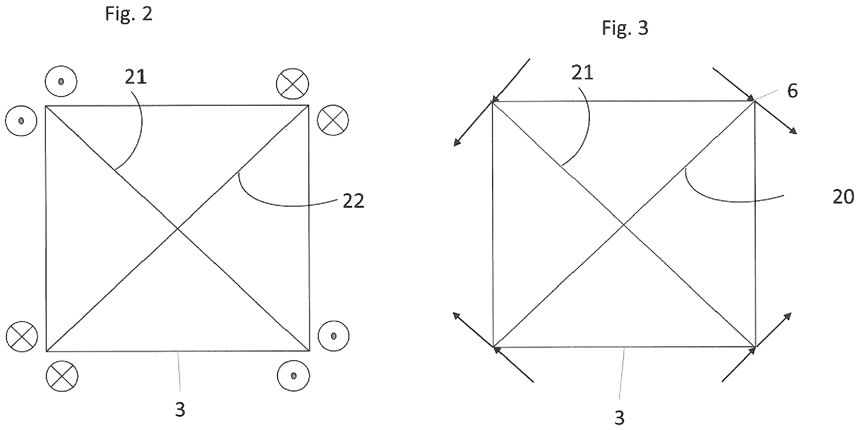

Figure 2 shows platform (3) from above. The circles with a dot and the circles with a cross represent the respective downward and upward forces as exercised by the eight actuators on the corners (6) of the platform (3) perpendicular to the plane of the rectangular platform (3). These forces cause a force-fight which causes out-of-plane deformations where one diagonal (22) of the platform (3) is pushed up and one diagonal (21) of the platform (3) is pushed down.

Figure 3 shows the platform (3) from above. The arrows represent a force as exercised by the eight actuators in the plane of the platform (3) on the corners (6) of platform (3) resulting in a force fight wherein an in-plane deformation will occur where both diagonals (20,21) of the platform (3) are squeezed together.

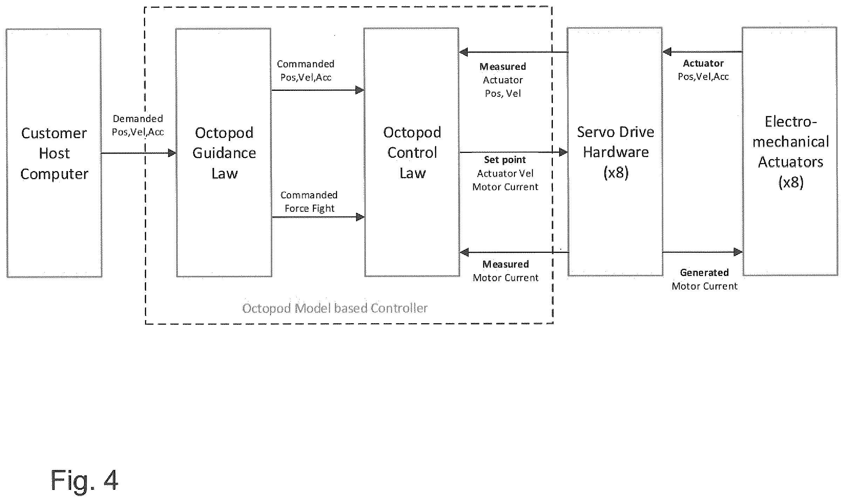

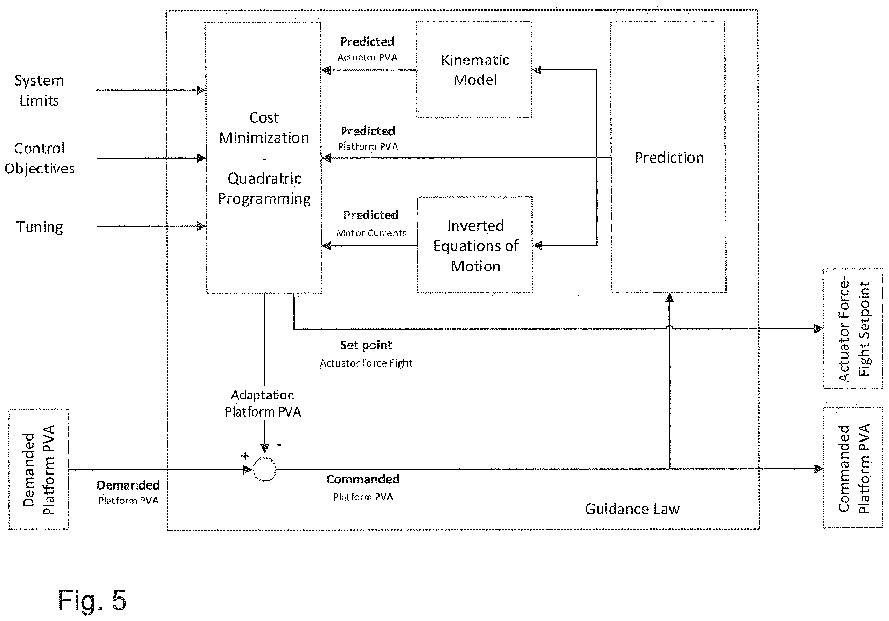

Figure 4 illustrates how the controller of a platform system according to Figure 1, or Octopod Model based Controller, communicates with the eight servo drives each individually connected to eight long stroke electromechanical actuators. A host computer generates a demanded platform movement set-point in platform position, velocity and acceleration. This set-point may be adjusted by an optional motion cueing filter to obtain a filtered set-point (not shown). The controller is divided into two elements, namely the Octopod Guidance Law and the Octopod Control Law. The Octopod Guidance law accepts the demanded platform movement set-point in platform position, velocity and acceleration from an external host computer. The demanded set-point is transformed into a commanded set-point for the position velocity and acceleration of the platform and a force-fight set-point in for the electric motors of the electromechanical actuators. The Guidance Law is designed such that no operational or physical limits are exceeded when the platform is moved in accordance to these set-points. The Guidance Law will be further described making use of Figure 5.

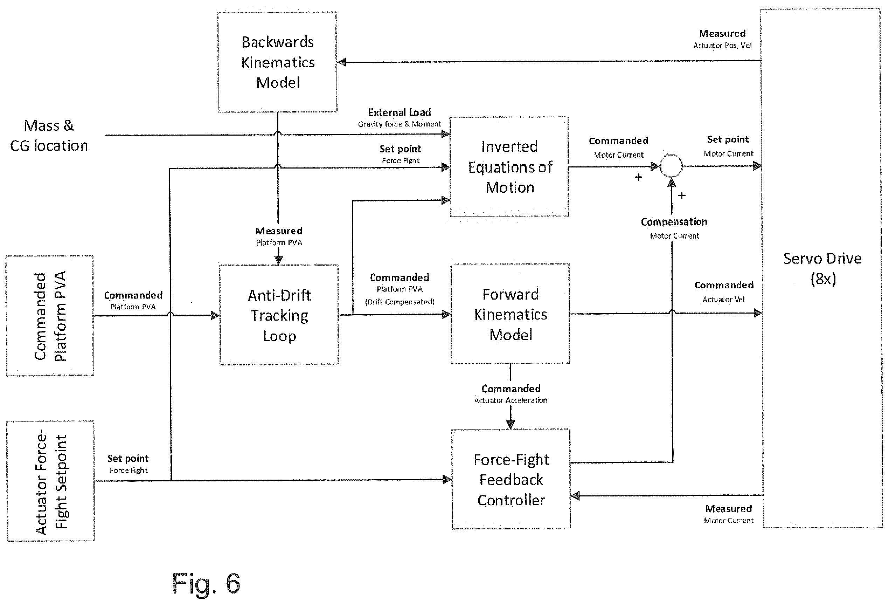

The objective of the Octopod Control Law in Figure 4 is to move the motion platform in accordance to the commanded set-point as commanded by the Guidance Law. The platform system of Figure 1 can be characterized as a multiple channel (i.e. multiple degrees of freedom), over-determined system (more actuators than degrees of freedom) which are highly cross-coupled. The Control Law (CL) is designed as a Multiple Input Multiple Output controller with feed-forward and feedback paths which is designed to decouple the cross-couplings between the degrees of freedom and handle force-fight issues which originate from having more actuators than degrees of freedom. The Control Law and its communication with the servo drives will be further described making use of Figure 6.

Figure 5 shows the Guidance Law of Figure 4 in more detail. The input to the Guidance Law is a demanded platform movement set-point in platform position, velocity and acceleration (PVA). There are two outputs: the commanded position velocity and acceleration set-point for the platform and the force-fight set-point. The Guidance Law is designed such that the combination of the commanded PVA set-point for the platform and the actuator force-fight are such that the demanded platform PVA is optimally tracked while respecting the physical and operational limits of the movement platform system hardware. The core element of the Guidance Law is a Model Predictive Control (MPC) algorithm. MPC is based on an iterative, finite horizon optimization of the state of the movement platform system using a cost minimization strategy. In the method, costs are assigned to deviations of specific system controlled variables with respect to a desired reference. The method uses a dynamic model of the system to compute the optimum action that minimizes the costs while respecting specific system limits. The MPC algorithm can either be configured as an unconstrained or constrained format.

Figure 5 shows that the Commanded platform PVA is projected a small time instance DT into the future. This results in the Predicted platform PVA which is a direct input for the MPC controller. There are two additional inputs to the MPC controller which also depend on the Predicted platform PVA. These are: the predicted actuator PVA which are computed using a kinematics model from the predicted platform PVA and the predicted motor currents which are computed from the Commanded PVA using the inverted equations of motion of the motion platform. Using these inputs, a cost minimization strategy is used to find the optimum adaptation of the Demanded platform PVA, and hence the Commanded platform PVA, in combination with a force-fight set-point. The parameters are control objectives, the motion platform physical limits and operational (usage) limits.

Figure 6 shows the Octopod Control Law of Figure 4 in more detail. The Control Law is a Multiple Input Multiple Output controller with a feed forward path and feedback path. In the feed forward paths a kinematics model of the octopod (the movement platform system) is used to transform the Commanded platform PVA into eight commanded actuator PVA set-point signals. These are passed to the servo-drives as inputs. The Inverted equations of motion of the motion platform are used to transform the Commanded platform PVA into a motor current set-point for each actuator. For every instance in time, the motor currents $Im$ can be expressed in terms of the Commanded Platform acceleration $Ac,$ the gravity wrench $Wg$ and force fight set-point as follows:

$$Im = K1 * Ac + K2 * Wg + K3 * FF \qquad (8)$$

where:

- $Im$ is a size 8 vector containing the motor current
- $Ac$ is a size 6 vector which contains the commanded platform acceleration in 6 degrees of freedom
- $K1$ is a (8x6) matrix which converts platform acceleration into motor current
- $Wg$ is a size 6 vector which contains the gravity wrench for the current commanded platform position
- $K2$ is a 8x6 matrix which converts the gravity wrench into motor currents.
- $FF$ is a size 2 vector which contains the in-plane and out-of-plane force-fight set-points
- K3 is a (8x2) matrix which converts force-fight set-point into motor current

The feedback paths are a feedback of force fight error and a feedback of platform position velocity and acceleration error. Feedback of force fight error, wherein the motor current set-point is adapted such that the difference between measured force-fight and force-fight set-point for in-plane and out-of-plane deformations, is counter acted. For any time instance, the measured force-fight $FF\_sensor$ causing in-plane and out-of-plane deformations can be computed as follows:

$$FF\_sensor = K5 * Ac - K6 * Im\_sensor \qquad (9)$$

in which:

- $FF\_sensor$ is a size 2 vector which contains the measured force-fights which cause the in-plane and out-of-plane deformations,
- $K5$ is a 6x2 matrix with which the platform commanded acceleration is multiplied
- $Im\_sensor$ is a size 8 vector with the measured motor currents
- $K6$ is a 8x2 matrix with which the measured motor currents are multiplied

$FF\_sensor$ is converted into a motor current error for each actuator using the following equation:

$$Im\_error \quad = K4 * (FF - FF\_sensor) \qquad (10)$$

In which:

- *Im error is a size 8 vector with the 8 motor* current errors
- *FF* is a size 2 vector with the force-fight setpoint.

- *K4 is a 8x2 matrix which converts the difference between the set-point force-fight and measured force-fight into motor current error.*

The feedback of platform position velocity and acceleration error uses the measured actuator position and velocity sensor data to reconstruct the measured platform PVA using a backwards kinematics model of the motion platform. An anti-drift tracking loop controller uses the error between the commanded platform PVA and measured platform PVA, to slowly adjust the commanded platform PVA such that the error is reduced as shown in Figure 6.

Applicants found that the above method may also be advantageously be used for any movement system having a number of actuators which is higher than the number of degrees of freedom of the movement system which could result in a force fight between the actuators. Therefore the invention is also directed to the following method.

Method for producing motion sensations using a motion platform system comprising a base; a platform movable along n degrees of freedom relative to said base and long-stroke actuators coupling the base with the platform, wherein at least n+1 long-stroke actuators couple the base with the platform resulting in that the platform system is an overdetermined movement platform system, further comprising a control of the overdetermined movement platform system by performing a guidance step (a) and a control law step (b), wherein

in guidance step (a) a demanded platform movement set-point is adapted to a commanded platform movement set-point by calculating a counter movement for the platform and by calculating a force-fight set-point, wherein the counter movement and force fight set-points are derived using a model predictive control algorithm which uses a cost-minimizing control strategy, and

in control law step (b) the long-stroke actuators are moved such that the commanded platform movement set-point of (a) is achieved while dynamically redistributing the forces as exercised by the actuators on the platform between the actuators according to the force-fight set-point obtained in (a).

The method is preferably further performed as described above.

In the above method n may be 3 to and including 6 and possible combinations may be 3 degrees of freedom with four actuators, 4 degrees of freedom with six actuators, 5 degrees of freedom with six actuators and 6 degrees of freedom with eight actuators.

The invention is also directed to a motion platform system wherein the motion platform system comprises a movement platform connected to a base by at least n+1 actuators, wherein the movement platform is movable along n degrees of freedom relative to the base resulting in that the movement simulator system is an overdetermined system and wherein the motion platform system comprises a controller which (a) is configured to adapt a demanded platform movement set-point to a commanded platform movement set-point, (b) is configured to move the n+1 actuators such that the commanded platform movement set-point is achieved and (c) is configured to dynamically redistribute the forces as exercised by the actuators on the platform between the actuators.

Further preferred embodiments are as described above for the earlier described system.

The combination of 6 degrees of freedom and eight actuators may be excluded from the scope of the invention for the above method and system if so required.

**Claims**

1. A motion platform system suited for generating a combination of large excursions, large velocities and high frequency responses for all degrees of freedom of the motion platform system,
   wherein the motion platform system comprises a movement platform connected to a base by more than one actuators,
   wherein the movement platform is movable along 6 degrees of freedom relative to the base,
   wherein the number of actuators connecting the movement platform with the base is at least eight resulting in that the movement simulator system is an overdetermined system.

2. A system according to claim 1, wherein the large excursions are more than 0.5 m, the accelerations are more than 40 m/s$^2$ and the high frequency responses are above 15 Hz.

3. A system according to claim 2, wherein the high frequency responses are between 25 and 35 Hz.

4. A system according to any one of claims 1-4, wherein the motion platform system comprises a controller which (a) is configured to adapt a demanded platform movement set-point to a commanded platform movement set-point, (b) is configured to move the eight long-stroke actuators such that the commanded platform movement set-point is achieved and (c) is configured to dynamically redistribute the forces as exercised by the actuators on the platform between the actuators.

5. A system according to any one of claims 1-4, wherein the motion platform system is suited to be used as a driving simulator or drive-flight simulator wherein the combination of large excursions, large velocities and high frequency responses for all degrees of freedom generate motion sensations on an operator, wherein the movement platform comprises a cabin which houses a seat for the operator and operator controller elements.

6. A system according to claim 5, wherein the base of the motion platform system is part of a horizontal displacement system for controlled displacement and acceleration of the movement platform system along the two horizontal axes.

7. A system according to any one of claims 1-4, wherein the motion platform system is suited to be used as a shaker for testing a test object, wherein the combination of large excursions, large velocities and high frequency responses for all degrees of freedom generate motion sensations on the test object and wherein the movement platform comprises means to connect the test object to the movement platform.

8. A system according to any one of claims 1-7, wherein the long stroke actuators are hydraulic actuators, electromechanical actuators or electromagnetic actuators.

9. A system according to claim 8, wherein the long stroke actuators are electromechanical actuators or electromagnetic actuators.

10. A system according to any one of claims 1-9, wherein the movement platform is rectangular and wherein each of the four corners of the platform is connected to two actuators.

11. Method for producing motion sensations in a combination of large excursions, large accelerations and high frequency response for all degrees of freedom using a motion platform system comprising a base; a platform movable along 6 degrees of freedom relative to said base and long-stroke actuators coupling the base with the platform, wherein at least eight long-stroke actuators couple the base with the platform resulting in that the platform system is an overdetermined movement platform system.

12. Method according to claim 11, wherein the large excursions are more than 0.5 m, the accelerations are more than 40 $m/s^2$ and the high frequency responses are above 15 Hz.

13. Method according to claim 12, wherein the high frequency responses are between 25 and 35 Hz.

14. Method according to any one of claims 11-13, further comprising a control of the overdetermined movement platform system by performing a guidance step (a) and a control law step (b), wherein
in guidance step (a) a demanded platform movement set-point is adapted to a commanded platform movement set-point by calculating a counter movement for the platform and by calculating a force-fight set-point, wherein the counter movement and force fight set-points are derived using a model predictive control algorithm which uses a cost-minimizing control strategy, and
in control law step (b) the long-stroke actuators are moved such that the commanded platform movement set-point of (a) is achieved while dynamically redistributing the forces as exercised by the actuators on the platform between the actuators according to the force-fight set-point obtained in (a).

15. Method according to any one of claims 11-14 as performed in a system according to any one of claims 1-10.

Fig. 1

Fig. 2

Fig. 3

21

22

3

21

6

20

3

EP 3 489 932 A1

Fig. 4

Fig. 5

Servo Drive (8x)

Backwards Kinematics Model

Inverted Equations of Motion

Forward Kinematics Model

Force-Fight Feedback Controller

Anti-Drift Tracking Loop

Commanded Platform PVA

Actuator Force-Fight Setpoint

Mass & CG location

**Measured** Actuator Pos, Vel

**Set point** Motor Current

**Compensation** Motor Current

**Commanded** Actuator Vel

**Measured** Motor Current

**Commanded** Motor Current

**External Load** Gravity force & Moment

**Set point** Force Fight

**Commanded** Platform PVA (Drift Compensated)

**Commanded** Actuator Acceleration

**Measured** Platform PVA

**Commanded** Platform PVA

**Set point** Force Fight

Fig. 6

Europäisches
Patentamt

European
Patent Office

Office européen
des brevets

# EUROPEAN SEARCH REPORT

Application Number

EP 17 20 3311

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Anonymous: "E2mtechnologies.eu: E2M introduces its latest testing solution, the eM6-A8 electric 6 degree of freedom shaker platform, featuring E2M's uni...", <br><br> 21 September 2017 (2017-09-21), pages 1-1, XP055457642, Retrieved from the Internet: URL:https://feedlink.me/e2mtechnologies.eu /e2m-introduces-latest-testing-solution-em 6-a8-electric-6-degree-freedom-shaker-plat form-featuring-e2ms-unique-patented-overde termined-technology/?+itemId=6047588390 [retrieved on 2018-03-08] * page 1 * | 1-15 | INV. G09B9/12 |
| X | Anonymous: "E2M introduces its latest testing solution, the eM6-A8 electric 6 degree of freedom shaker platform, featuring E2M's unique patented overdetermined technology. ¦ E2M Technologies B.V.", <br><br> 21 September 2017 (2017-09-21), pages 1-4, XP055457646, Retrieved from the Internet: URL:https://www.e2mtechnologies.eu/e2m-int roduces-latest-testing-solution-em6-a8-ele ctric-6-degree-freedom-shaker-platform-fea turing-e2ms-unique-patented-overdetermined -technology/ [retrieved on 2018-03-08] * page 1 * | 1-15 | |

TECHNICAL FIELDS
SEARCHED      (IPC)

G09B

-/--

The present search report has been drawn up for all claims

| Place of search | Date of completion of the search | Examiner |
|---|---|---|
| Munich | 9 March 2018 | Giemsa, Falk |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons
                     
& : member of the same patent family, corresponding
      document

EPO FORM 1503 03.82 (P04C01)

Europäisches
Patentamt

European
Patent Office

Office européen
des brevets

# EUROPEAN SEARCH REPORT

Application Number

EP 17 20 3311

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/072327 A1 (WACH RYAN X [US]) 16 March 2017 (2017-03-16) * paragraphs [0029] - [0030]; figures 3-5 * <br> * paragraph [0035]; claim 1; figure 6 * | 1,11 | |
| X | Anonymous: "E2M introduces redundant 6-DOF system for extra safety critical applications ¦ E2M Technologies B.V.", <br> , <br> 30 May 2017 (2017-05-30), pages 1-4, XP055457694, <br> Retrieved from the Internet: <br> URL:https://www.e2mtechnologies.eu/e2m-introduces-redundant-6-dof-system-extra-safety-critical-applications/ <br> [retrieved on 2018-03-08] <br> * page 1 * | 1,11 | |
| X | Anonymous: "E2M technologies Electric Motion Specialists   Company brochure", <br> , <br> 30 December 2016 (2016-12-30), pages 1-2, XP055457689, <br> Retrieved from the Internet: <br> URL:https://www.e2mtechnologies.eu/wp-content/uploads/2016/12/E2M_brochure_2016web.pdf <br> [retrieved on 2018-03-08] <br> * page 2 * <br> -/-- | 1,11 | TECHNICAL FIELDS SEARCHED (IPC) |

The present search report has been drawn up for all claims

| Place of search | Date of completion of the search | Examiner |
|---|---|---|
| Munich | 9 March 2018 | Giemsa, Falk |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 17 20 3311

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | Anonymous: "September 2017 ¦ E2M Technologies B.V.", <br> , <br> 21 September 2017 (2017-09-21), pages 1-4, XP055457636, <br> Retrieved from the Internet: <br> URL:https://www.e2mtechnologies.eu/2017/09/ <br> [retrieved on 2018-03-08] <br> * page 1 * <br> ----- | 1-15 | |
| L | Anonymous: "May 2017 ¦ E2M Technologies B.V.", <br> , <br> 30 May 2017 (2017-05-30), pages 1-4, XP055457691, <br> Retrieved from the Internet: <br> URL:https://www.e2mtechnologies.eu/2017/05/ <br> [retrieved on 2018-03-08] <br> * page 1 * <br> ----- | 1-15 | |
| L | Anonymous: "e2m octopod 2017", <br> , <br> 8 March 2018 (2018-03-08), pages 1-2, XP055457738, <br> Retrieved from the Internet: <br> URL:https://www.google.co.uk/search?hl=en&as_q=e2m+octopod+2017&as_epq=&as_oq=&as_eq=&as_nlo=&as_nhi=&lr=&cr=&as_qdr=all&as_sitesearch=e2mtechnologies.eu&as_occt=any&safe=images&as_filetype=&as_rights= <br> [retrieved on 2018-03-08] <br> * page 1 * <br> ----- | 1-15 | |

TECHNICAL FIELDS
SEARCHED (IPC)

-/--

The present search report has been drawn up for all claims

| Place of search | Date of completion of the search | Examiner |
|---|---|---|
| Munich | 9 March 2018 | Giemsa, Falk |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 17 20 3311

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Anonymous: "E2M-news-eM6-A8-440x340", , 29 October 2017 (2017-10-29), pages 1-1, XP055457701, Retrieved from the Internet: URL:https://web.archive.org/web/2017102913 3905/https://www.e2mtechnologies.eu/wp-con tent/uploads/2017/09/E2M-news-eM6-A8-440x3 40.jpg [retrieved on 2018-03-08] * page 1 * ----- | 1 | |
| | | | **TECHNICAL FIELDS SEARCHED (IPC)** |

The present search report has been drawn up for all claims

| Place of search | Date of completion of the search | Examiner |
|---|---|---|
| Munich | 9 March 2018 | Giemsa, Falk |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 489 932 A1**

## ANNEX TO THE EUROPEAN SEARCH REPORT
## ON EUROPEAN PATENT APPLICATION NO.

EP 17 20 3311

This annex lists the patent family members relating to the patent documents cited in the above-mentioned European search report.
The members are as contained in the European Patent Office EDP file on
The European Patent Office is in no way liable for these particulars which are merely given for the purpose of information.

09-03-2018

| Patent document cited in search report | Publication date | Patent family member(s) | Publication date |
|---|---|---|---|
| US 2017072327 A1 | 16-03-2017 | NONE | |

For more details about this annex : see Official Journal of the European Patent Office, No. 12/82

EPO FORM P0459

22

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005042578 A
- US 20110308296 A
- US 8996179 B2
- US 5931739 A